(19) **Europäisches Patentamt**

**European Patent Office**

**Office européen des brevets**

(11) **EP 4 715 598 A1**

(12) **EUROPÄISCHE PATENTANMELDUNG**

(43) Veröffentlichungstag:
**25.03.2026  Patentblatt 2026/13**

(21) Anmeldenummer: **24202143.4**

(22) Anmeldetag: **24.09.2024**

(51) Internationale Patentklassifikation (IPC):
***G06F 11/14*** *(2026.01)*

(52) Gemeinsame Patentklassifikation (CPC):
**G06F 11/1474**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
- **Jergler, Martin**
  **85567 Pienzenau (DE)**
- **Telschig, Kilian**
  **81543 München (DE)**
- **Winhuysen, Jan**
  **80469 München (DE)**

(74) Vertreter: **Siemens Patent Attorneys**
**Postfach 22 16 34**
**80506 München (DE)**

(54) **SYSTEM UND VERFAHREN ZUM KOMPENSIEREN VON AUSFÄLLEN VON KOMPONENTEN**

(57)   Die Erfindung betrifft ein System (S) zum Kompensieren von Ausfällen von Komponenten (A, B, C, D), wobei das System (S) mehrere Komponenten (A, B, C, D) aufweist, wobei jede der mehreren Komponenten (A, B, C, D) dazu ausgebildet ist, zumindest eine Aufgabe auszuführen, wobei die Komponenten (A, B, C, D) des Weiteren dazu ausgebildet sind, mit anderen Komponenten (A, B, C, D) Nachrichten (E, E1, E2, E3) auszutauschen, um die jeweiligen Aufgaben, die Teil eines Prozesses sind, auszuführen. Das System (S) weist des Weiteren eine Überwachungseinheit (UE), die dazu ausgebildet ist, den Austausch von Nachrichten (E, E1, E2, E3) zwischen den mehreren Komponenten (A, B, C, D) zur Durchführung von Prozessen zu überwachen, und eine Kompensationseinheit (KE) auf, die dazu ausgebildet ist, basierend auf dem Austausch von Nachrichten (E, E1, E2, E3) ein Prozessmodell des Systems (S) zu erstellen, einen Ausfall einer Komponente (A, B, C, D) während der Durchführung eines Prozesses zu detektieren und basierend auf dem Ausfall der Komponente (A, B, C, D) eine oder mehrere andere Komponenten (A, B, C, D) des Systems (S), die an demselben Prozess beteiligt sind, über die ausgefallene Komponente (A, B, C, D) zu informieren, um den Ausfall der Komponente (A, B, C, D) zu kompensieren.

FIG 1

EP 4 715 598 A1

**Beschreibung**

Die vorliegende Erfindung betrifft ein System zum Kompensieren von Ausfällen von Komponenten. Darüber hinaus betrifft die vorliegende Erfindung ein Verfahren zum Kompensieren von Ausfällen von Komponenten. Des Weiteren betrifft die vorliegende Erfindung ein Computerprogrammprodukt, welches auf einer programmgesteuerten Einrichtung die Durchführung des Verfahrens zum Kompensieren von Ausfällen von Komponenten veranlasst.

Ein verteiltes Computersystem kann eine Reihe von Komponenten umfassen, die jeweils eine bestimmte Funktionalität implementieren und entsprechende Aufgaben ausführen. Ist das verteilte Computersystem ein ereignisbasiertes System, kommunizieren die Komponenten miteinander, indem sie Ereignisse austauschen. Ein Ereignis ist eine besondere Art von Nachricht, die einen bestimmten Typ, eine eindeutige ID und einige anwendungsspezifische Nutzdaten hat. Die Komponente, die das Ereignis erzeugt und sendet, wird auch als Ereigniserzeuger oder Ereignissender bezeichnet, während die Komponente, die das Ereignis empfängt, auch als Ereignisverbraucher oder Ereignisempfänger bezeichnet wird. Ein Ereignisnachrichtensystem oder "Event Messaging System" überträgt Nachrichten bzw. Ereignisse zwischen sendenden und empfangenden Komponenten.

Solche ereignisbasierten Systeme ermöglichen die Ausführung komplexer Prozesse bzw. Workflows. Jede Komponente des Workflows wird durch ein Ereignis ausgelöst, führt dann eine bestimmte Aufgabe aus und sendet schließlich ein weiteres Ereignis bzw. Nachricht, sobald die Aufgabe abgeschlossen ist.

Workflows in ereignisbasierten Systemen werden jedoch häufig implizit definiert. Mit anderen Worten: Es wird kein Workflow-Modell im Voraus erstellt. Stattdessen hat jede Komponente eine sehr begrenzte lokale Ansicht und weiß nur, welche Ereignisse sie empfängt und welche anderen Ereignisse sie als Reaktion auf ein empfangenes Ereignis und die Erledigung der zugehörigen Aufgabe sendet.

Da in bisherigen Systemen kein zentraler Koordinator existiert und die Arbeitsabläufe bzw. Prozesse oder Workflows nur implizit definiert sind, können ausfallende Komponenten zu unvollständigen Arbeitsabläufen führen, die für immer stecken bleiben. In solchen Situationen ist unklar, welche Aufgaben in welchen Komponenten kompensiert werden müssen und wie der Initiator des Workflows, beispielsweise die Anfangskomponente oder ein Benutzer, über das fehlerhafte Ergebnis informiert werden soll. Um einen sicheren oder zumindest transparenten Ablauf sicherzustellen, ist es notwendig, den Initiator so schnell wie möglich über den Ausfall zu informieren.

Unabhängig vom grammatikalischen Geschlecht eines bestimmten Begriffes sind Personen mit männlicher, weiblicher oder anderer Geschlechteridentität mit umfasst.

Vor diesem Hintergrund besteht eine Aufgabe der vorliegenden Erfindung darin, eine Möglichkeit bereitzustellen, die Reaktionszeit von ereignisbasierten Workflows im Falle von Ausfällen zu erhöhen, so dass Benutzer oder abhängige Systeme nach dem Auftreten von Ausfällen so schnell wie möglich den normalen Betrieb wieder aufnehmen können.

Demgemäß wird ein System zum Kompensieren von Ausfällen von Komponenten vorgeschlagen, wobei das System mehrere Komponenten aufweist, wobei jede der mehreren Komponenten dazu ausgebildet ist, zumindest eine Aufgabe auszuführen, wobei die Komponenten des Weiteren dazu ausgebildet sind, mit anderen Komponenten Nachrichten auszutauschen, um die jeweiligen Aufgaben, die jeweils Teil eines Prozesses sind, auszuführen.

Bei dem System handelt es sich insbesondere um ein verteiltes Computersystem, z.B. ein Cloudsystem oder Softwaresystem mit verteilten Containern, das mehrere Komponenten oder Knoten aufweist. Diese Komponenten können einzelne Aufgaben ausführen, die zusammenwirken und einen Workflow bzw. Prozess bilden. Wie bereits oben erläutert, können die Komponenten zum Ausführen der jeweiligen Aufgaben Nachrichten bzw. Ereignisse austauschen.

Um nun im Gegensatz zu bisherigen Systemen in der Lage zu sein, auf den Ausfall einer Komponente reagieren zu können, auch wenn die Workflows oder Prozesse nur implizit bekannt sind, ist in dem hier vorgeschlagenen System vorgesehen, anhand der Kommunikation zwischen den Komponenten ein Prozessmodell zu erstellen, und unter Verwendung des Prozessmodells bei Ausfall einer Komponente diesen Ausfall zu kompensieren.

Hierzu weist das System eine Überwachungseinheit und eine Kompensationseinheit auf. Die jeweilige Einheit, zum Beispiel Überwachungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuereinheit auf einem Server, einem Hostsystem oder ähnlichem ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die Überwachungseinheit ist dazu ausgebildet, den Austausch von Nachrichten zur Durchführung von Prozessen zwischen den mehreren Komponenten des Systems zu überwachen. Hierzu kann die Überwachungseinheit beispielweise in die Kommunikationspfade zwischen den Komponenten zwischengeschaltet sein. Es ist auch möglich, dass der Überwachungseinheit alle Nachrichten, die zwischen Komponenten ausgetauscht werden, ebenfalls übermittelt werden.

Die Kompensationseinheit ist dann dazu ausgebildet, basierend auf dem Austausch von Nachrichten ein Prozessmodell des Systems zu erstellen, einen Ausfall einer Komponente während der Durchführung eines Prozesses zu detektieren und basierend auf dem Ausfall der Komponente eine oder mehrere andere Komponenten des Systems, die an demselben Prozess beteiligt sind, über die ausgefallene Komponente zu informieren, um den Ausfall der Komponente zu kompensieren. Unter einer Kompensation kann in diesem Fall verstanden werden, dass entweder andere Komponenten zur Verarbeitung des Prozesses eingesetzt werden können, die die Aufgaben der ausgefallenen Komponente übernehmen, oder dass andere Komponenten oder ein Initiator über den Ausfall der Komponente informiert werden, um entsprechende Schritte unternehmen zu können. In jedem Fall ist die Kompensationseinheit in der Lage, einen Ausfall einer Komponente zu detektieren und basierend auf dem erstellten Prozessmodell auch für implizite Prozesse, deren Schritte nicht von vornherein festgelegt sind, eine Kompensation des Ausfalls einer Komponente in die Wege zu leiten.

Durch das System werden also zwei Teilprobleme gelöst:

1. Nicht bekannte, implizite Prozesse werden durch Erstellung des Prozessmodells in explizite Prozesse umgewandelt. Auf diese Weise können mögliche Aufgabenausführungssequenzen der Komponenten, auch wenn diese zu Beginn des Betriebs des Systems nicht explizit bekannt sind, hergeleitet werden.

2. Basierend auf den abgeleiteten Prozessmodellen können Ausfälle von Komponenten während der Laufzeit des Systems detektiert werden. Das System kann somit bei Ausfall einer Komponente eines aktiven Prozesses, d. h. eines Prozesses, der gerade von den Komponenten ausgeführt wird, auf diesen Ausfall reagieren.

Wie bereits oben erläutert, ist die Kompensationseinheit dazu ausgebildet, ein Prozessmodell oder Workflowmodell des Systems zu erstellen. Hierzu kann beispielsweise Process Mining oder ähnliche Verfahren verwendet werden. Diese können Ereignisse, die im System erzeugt werden, erkennen und sie in Beziehung zueinander zu setzen. Die Beziehungen zwischen den verschiedenen Ereignistypen werden dann verwendet, um Modelle der zugrundeliegenden Arbeitsabläufe des Systems zu erlernen, d. h. die Sequenzen, in denen Aufgaben und ihre Komponenten aufgerufen werden. Dies kann offline durchgeführt werden, beispielsweise basierend auf Protokolldateien, kann aber auch online, d. h. in Echtzeit, durch Überwachen von Ereignisdaten durchgeführt werden. In beiden Konstellationen, online und offline, hängt die Genauigkeit der abgeleiteten Workflow-bzw. Prozessmodelle von der Größe der Protokolldateien oder der Anzahl der Ereignisse ab, die gesammelt und analysiert wurden. Das bedeutet, je mehr Daten zur Verfügung stehen und verarbeitet werden können, desto genauer ist das Prozessmodell, das von der Kompensationseinheit erstellt wird.

Im Gegensatz zu bisherigen Systemen ist die hier verwendete Kompensationseinheit nun in der Lage unter Verwendung des Prozessmodells nicht nur einen Ausfall einer Komponente zu detektieren, sondern diesen Ausfall auch zu kompensieren. Insbesondere ist die Kompensationseinheit auch in der Lage, einen vollständigen Ausfall einer Komponente, die nicht mehr in der Lage ist, selbst eine Fehlerbearbeitung und Kompensation durchzuführen, zu kompensieren. Auf diese Weise werden auch Ausfälle abgesichert, bei denen Komponenten nicht ordnungsgemäß ausfallen, d. h. nicht in der Lage sind, selbst Kompensationsereignisse für den Workflow bzw. Prozess zu senden.

In einem bislang verwendeten Ansatz wurde beispielsweise durch einen zentralen Transaktionskoordinator ein Prozess als verteilte Transaktionen betrachtet. Hier würde jede Komponente jedoch für einen Prozess nur die notwendigen Änderungen in einer ersten Phase vorbereiten, und nur wenn der zentrale Koordinator über alle Aufgaben, die erfolgreich vorbereitet wurden, Bescheid weiß, werden die Transaktionen freigegeben und die entsprechenden Änderungen dauerhaft wirksam gemacht. Wenn jedoch die Komponenten Aufgaben durchführen, die voneinander abhängen und nur durchgeführt werden, wenn die vorhergehende Aufgabe tatsächlich durchgeführt und nicht nur vorbereitet wurde, funktioniert dieser Ansatz nicht mehr, im Gegensatz zu dem hier beschriebenen Vorgehen der Kompensationseinheit, die auch bei voneinander abhängenden Aufgaben von Komponenten eine sichere und zuverlässige Überwachung von Prozessen und Kompensation bei Ausfällen durchführt.

Gemäß einer Ausführungsform ist die Kompensationseinheit dazu ausgebildet, zu detektieren, wenn eine Nachricht nicht in einem vordefinierten Zeitraum von einer sendenden Komponente an eine empfangende Komponente übertragen wird, und dies als Ausfall der sendenden Komponente zu detektieren. Auf diese Weise kann die Kompensationseinheit auf einfache Weise, ohne eine Aktion der ausgefallenen Komponente selbst, detektieren, ob ein Ausfall vorliegt. Lediglich eine Überwachung des zeitlichen Ablaufs von Ereignissen ist erforderlich. Wird beispielsweise von einer ersten Komponente an eine zweite Komponente ein Ereignis bzw. eine Nachricht gesendet und diese zweite Komponente sendet innerhalb eines vordefinierten Zeitraums keine weitere Nachricht an eine dritte Komponente, wie es anhand des Prozessmodells vorgesehen ist, kann die Kompensationseinheit aufgrund des Fehlens dieser weiteren Nachricht als Ausfall der dritten Komponente gewertet werden.

Somit kann durch die Kompensationseinheit ein vollständiger Ausfall einer Komponente abgefangen und kompensiert werden. In bisherigen Systemen war es zwar möglich, jede Transaktion durch eine kompensierende Transaktion zurückzunehmen. Allerdings musste hierzu eine fehlgeschlagene lokale Transaktion aktiv ein spezielles Kompensationsereignis senden, das von der vorherigen Aufgabe/Komponente empfangen wurde, um die Kompensationstransaktion aufzurufen. Wenn jedoch in einem solchen System eine Komponente vollständig ausfällt und nicht in der Lage ist, die Kompensation durch die Ausgabe eines Kompensationsereignisses einzuleiten, ist keine Kompensation möglich. Dieses Problem wird durch das hier vorgeschlagene System gelöst, in dem die Kompensationseinheit keine aktive Information einer ausgefallenen Komponente benötigt, wie oben beschrieben ist.

Gemäß einer weiteren Ausführungsform ist die Kompensationseinheit dazu ausgebildet, bei einem detektierten Ausfall einer Komponente die Komponenten, die im Prozessmodell der ausgefallenen Komponente vorgeschaltet sind, über den Ausfall der Komponente zu informieren. Insbesondere ist die Kompensationseinheit dazu ausgebildet, die Komponenten, die im Prozessmodell der ausgefallenen Komponente vorgeschaltet sind, zu veranlassen, den entsprechenden Prozess, der die ausgefallene Komponente beinhaltet, rückabzuwickeln. Hierzu kann die Kompensationseinheit der Reihe nach die vorgeschalteten Komponenten anweisen, die jeweiligen Aufgaben rückgängig zu machen. Dies kann insbesondere unter Verwendung des Prozessmodells erfolgen, in dem die Schritte bzw. die Reihenfolge der Ereignisse/Aufgaben hinterlegt sind.

Gemäß einer Ausführungsform ist die Überwachungseinheit dazu ausgebildet, für eine Nachricht einen Zeitpunkt einer Nachricht und die aussendende Komponente zu bestimmen und zu speichern. Des Weiteren kann die Überwachungseinheit dazu ausgebildet sein, für die Nachricht die empfangende Komponente zu bestimmen und zu speichern. Darüber hinaus kann die Überwachungseinheit dazu ausgebildet sein, einen Nachrichtentyp der Nachricht zu bestimmen und zu speichern. Diese Informationen kann die Überwachungseinheit beispielsweise in einer Tabelle abspeichern. Dies bietet einen umfassenden Überblick über die Nachrichten, die in dem System durch die Komponenten versendet werden, und bildet so ein umfangreiches Prozessmodell des Systems.

Gemäß einer weiteren Ausführungsform ist die Überwachungseinheit dazu ausgebildet, Nachrichten von mehreren Komponenten basierend auf Kausalitäten zu korrelieren und für eine Nachricht eine eindeutige Identifikationsnummer der Nachricht und eine Kausalitätsidentifikationsnummer zu speichern, wobei die Kausalitätsidentifikationsnummer angibt, mit welcher Nachricht die Nachricht aufgrund einer Kausalität korreliert ist. Eine Kausalität zwischen Nachrichten gibt hierbei an, in welchem kausalen Zusammenhang zwei Nachrichten auftreten. Insbesondere kann der kausale Zusammenhang hier auch ein zeitlicher Zusammenhang sein. Die Überwachungseinheit kann beispielsweise bestimmen, dass bei Auftreten einer Nachricht als nächstes immer eine bestimmte andere Nachricht auftritt und diese beiden Nachrichten daher miteinander korrelieren. Die Angabe der Kausalitätsidentifikationsnummer gibt für eine Nachricht dann an, mit welcher anderen Nachricht diese korreliert ist. Durch diesen kausalen Zusammenhang kann die Kompensationseinheit dann erkennen, welche Komponente als nächstes aktiv sein muss, d. h., eine Nachricht bzw. ein Ereignis ausgeben muss, wenn eine bestimmte Nachricht auftritt. Wenn dann diese Nachricht nicht auftritt, kann die Kompensationseinheit, wie oben beschrieben, einen Ausfall der entsprechenden Komponente detektieren.

Gemäß einer weiteren Ausführungsform ist die Überwachungseinheit dazu ausgebildet, innerhalb der ausgetauschten Nachrichten eine Häufigkeit des Auftretens von Nachrichten zu detektieren und diese an die Kompensationseinheit zur Erstellung des Prozessmodells zu übertragen. Das Prozessmodell kann somit auch angeben, mit welcher Häufigkeit und damit mit welcher Wahrscheinlichkeit nach einer ersten Nachricht eine zweite Nachricht an eine bestimmte Komponente gesendet wurde. Diese Wahrscheinlichkeiten decken somit ab, dass z.B. nach einer ersten Nachricht an eine erste Komponente eine zweite Nachricht folgt, die mit einer ersten Wahrscheinlichkeit an eine zweite Komponente und mit einer zweiten Wahrscheinlichkeit an eine dritte Komponente gesendet wird. Das Prozessmodell kann daher auch darstellen, dass nicht immer dieselben Komponenten nacheinander benötigt werden, sondern dass auch andere Reihenfolgen der Komponenten innerhalb eines Workflows bzw. Prozesses möglich sind.

Gemäß einer weiteren Ausführungsform ist die Kompensationseinheit dazu ausgebildet, die Nachrichten über einen vordefinierten Zeitraum zu berücksichtigen, um das Prozessmodell zu erstellen. Insbesondere kann die Kompensationseinheit dazu ausgebildet sein, den Zeitraum basierend auf einer ausgewählten Genauigkeit der Vorhersage zu bestimmen. Soll die Vorhersage genauer sein, kann die Kompensationseinheit einen längeren Zeitraum berücksichtigen. Auf diese Weise können kleine Abweichungen im Ablauf der Nachrichten durch die höhere Gesamtdatenmenge nicht ins Gewicht fallen. Des Weiteren kann die Kompensationseinheit Nachrichten, die älter als ein vordefinierter Schwellwert sind, unberücksichtigt lassen. Auf diese Weise können ältere Nachrichten, die beispielsweise aufgrund von Änderungen des Systems nicht mehr aktuell sind, bei der Erstellung des Prozessmodells ignoriert werden. Dies macht das Prozessmodell zuverlässiger und die Detektion und Kompensation von ausgefallenen Komponenten genauer.

Gemäß einem weiteren Aspekt wird ein Verfahren zum Kompensieren von Ausfällen von Komponenten in einem System vorgeschlagen, wobei das System mehrere Komponenten aufweist, wobei jede der mehreren Komponenten zumindest eine Aufgabe ausführt, wobei die Komponenten mit anderen Komponenten Nachrichten austauschen, um die jeweiligen Aufgaben, die Teil eines Prozesses sind, auszuführen. Das Verfahren weist die Schritte auf:

- Überwachen des Austauschs von Nachrichten zwischen den mehreren Komponenten zur Durchführung von Prozessen,
- Erstellen eines Prozessmodells basierend auf dem Austausch von Nachrichten,
- Detektieren eines Ausfalls einer Komponente während der Durchführung eines Prozesses,
- Informieren von einer oder mehrerer anderer Komponenten des Systems, die an demselben Prozess beteiligt sind, über die ausgefallene Komponente basierend auf dem Ausfall der Komponente, und

- Kompensieren des Ausfalls der Komponente.

Die für das vorgeschlagene System beschriebenen Ausführungsformen und Merkmale gelten für das vorgeschlagene Verfahren entsprechend. Des Weiteren sollte beachtet werden, dass die Verfahrensschritte in der angegebenen Reihenfolge oder in anderer Reihenfolge oder auch zumindest teilweise gleichzeitig durchgeführt werden.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1    zeigt ein schematisches Blockdiagramm eines Systems zum Kompensieren von Ausfällen von Komponenten;

Fig. 2    zeigt ein schematisches Ablaufdiagramm eines Verfahrens zum Kompensieren von Ausfällen von Komponenten;

Fig. 3    zeigt ein schematisches Diagramm eines Ablaufs von Nachrichten in dem System von Fig. 1;

Fig. 4    zeigt ein Modell des Nachrichtenaustausches in dem System von Fig. 1; und

Fig. 5    zeigt einen Ablauf von Ereignissen mit Ausfall einer Komponente für das System von Fig. 1.

In den Figuren sind gleiche oder funktionsgleiche Elemente mit denselben Bezugszeichen versehen worden, sofern nichts anderes angegeben ist.

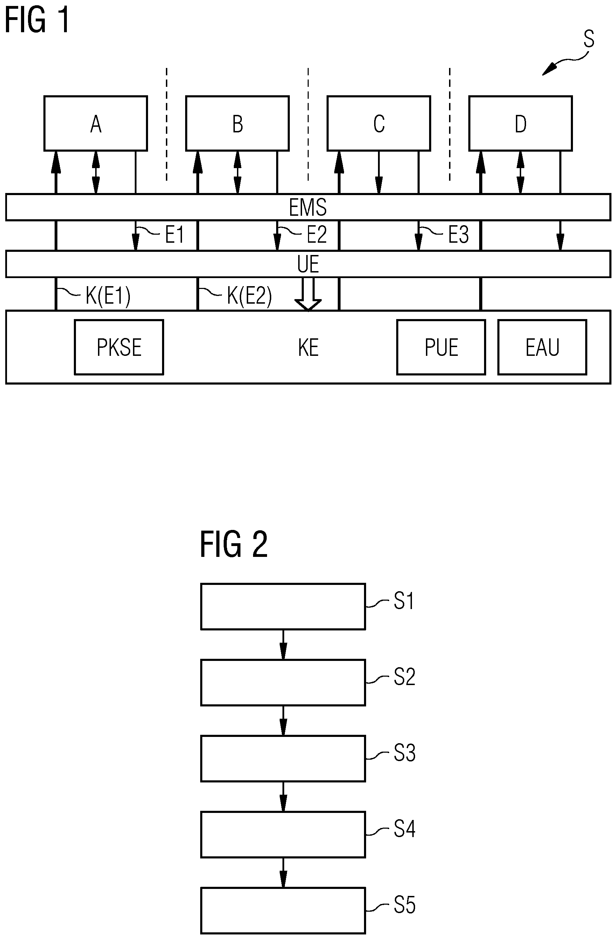

Fig. 1 zeigt ein System S mit mehreren Komponenten A, B, C, D. Das System S kann beispielsweise ein verteiltes Computersystem sein, in dem die Komponenten A bis D jeweils Aufgaben durchführen, um verschiedene Workflows auszuführen. Die Aufgaben der einzelnen Komponenten A bis D können dabei zusammenwirken und voneinander abhängen oder parallel ausgeführt werden. Beispielsweise können die Komponenten A, B und C einen ersten Workflow bzw. Prozess ausführen und die Komponenten A und D können einen zweiten Workflow bzw. Prozess ausführen.

Zum Durchführen der Aufgaben tauschen die Komponenten A bis D Nachrichten, im Folgenden auch Ereignisse E genannt, aus. Der Austausch dieser Nachrichten E erfolgt über ein Ereignisnachrichtensystem EMS. Wenn nun allerdings eine der Komponenten, beispielsweise Komponente C ausfällt, war es bislang erforderlich, dass diese Komponente C ein entsprechendes Signal ausgibt, damit das System S einen Ausfall dieser Komponente C abfangen kann. Fällt diese Komponente C jedoch vollständig aus und ist nicht mehr in der Lage, ein entsprechendes Signal auszugeben, wurde ein solcher Ausfall in bisherigen Systemen nicht abgefangen.

Um nun eine sichere Kompensation des Ausfalls von Komponenten zu ermöglichen, weist das hier beschriebene System S eine Überwachungseinheit UE auf. Diese Überwachungseinheit UE zeichnet auf, wann Ereignisse bzw. Nachrichten E von welcher Komponente A bis D empfangen werden. Eine Kompensationseinheit KE bestimmt basierend darauf ein Prozessmodell des Ablaufs von Nachrichten bzw. Ereignissen E, E1-E3 zwischen den Komponenten A bis D. Hierzu kann die 'Kompensationseinheit KE beispielsweise eine Ereignisanalyseeinheit EAU aufweisen.

Diese Ereignisanalyseeinheit EAU kann die Nachrichten bzw. Ereignisse E mittels Kausalitätsinformationen korrelieren. Das bedeutet, dass jedes Ereignis E eine systemweit eindeutige ID hat und zusätzlich eine Kausalitäts-ID trägt, d. h. die ID des Ereignisses E, das die Veröffentlichung oder Ausführung dieses Ereignisses E verursacht hat.

In dem Verfahren, wie es durch das System S durchgeführt wird, wird also in einem ersten Schritt S1 der Austausch von Nachrichten bzw. Ereignissen E zwischen den mehreren Komponenten A bis D zur Durchführung durch die Überwachungseinheit UE überwacht. Durch die Kompensationseinheit KE wird dann in Schritt S2 das Prozessmodell basierend auf dem Austausch von Nachrichten E erstellt.

Die Kompensationseinheit KE kann anschließend basierend auf dem Prozessmodell einen Ausfall einer Komponente A bis D während der Durchführung eines Prozesses in Schritt S3 detektieren und in Schritt S4 eine oder mehrere andere Komponenten A bis D des Systems S, die an demselben Prozess beteiligt sind, über die ausgefallene Komponente informieren. In Schritt S5 wird schließlich der Ausfall der Komponente kompensiert, beispielsweise durch Rückabwickeln des Prozesses.

Das System S basiert also auf den Folgenden Einheiten und Parametern:

- Überwachungseinheit UE: Die Überwachungseinheit UE sammelt Statistiken über die im System S ausgetauschten Ereignisse E und aggregiert diese, während sie stattfinden. Die Daten, die durch die Überwachungseinheit UE gesammelt werden, können auch Verfolgungsdaten genannt werden und werden nach einer Aufwärmphase über Ereignisse und ihre Beziehungen im System gesammelt. Die Dauer dieser Aufwärmphase ist ein konfigurierbarer Parameter. Zusätzlich können auch Informationen über ein einzelnes Ereignis, das in dem ereignisbasierten System S auftritt, in Echtzeit durch die Überwachungseinheit UE detektiert werden.
- Kompensationseinheit KE: Wie oben erläutert, erstellt die Kompensationseinheit KE ein explizites Workflow-bzw. Prozessmodell auf der Grundlage der Daten der Überwachungseinheit UE. Des Weiteren überwacht sie aktuell ausgeführte Workflow-Instanzen, detektiert ausfallende Komponenten und kompensiert Aufgaben in Workflows, die von ausfallenden Komponenten betroffen sind.
- Ereignisanalyseeinheit EAU: Diese kann Teil der Kompensationseinheit KE sein und kann eine Logik innerhalb der Kompensationseinheit KE zum Aufbau eines expliziten Workflow-Modells aus den Daten der Überwachungseinheit UE darstellen.
- Prozessüberwachungseinheit PUE: Diese kann ebenfalls Teil der Kompensationseinheit KE sein und eine Logik innerhalb der Kompensationseinheit KE darstellen, die die aktuell ausgeführten Workflow-Instanzen verfolgt, um Komponentenausfälle, beispielsweise auf der Grundlage von Zeitüberschreitungen oder Timeouts von Ereignissen, zu detektieren. Die Prozessüberwachungseinheit PUE kann auch Informationen aus einzelnen Ereignissen aus dem System S erfassen, um neue Instanzen eines Workflows zu detektieren, zu registrieren und deren Zustand zu überwachen.
- Ereignis-Timeout: Ein Ereignis, das in einer bestimmten Zeitspanne für eine bestimmte Workflow-Instanz erwartet wurde, aber nicht eingetreten ist.
- Prozesskompensationseinheit PKSE: Diese kann ebenfalls Teil der Kompensationseinheit KE sein und eine Logik innerhalb der Kompensationseinheit KE darstellen, die Kompensationssignale K(E1), K(E2) an Systemkomponenten A bis D sendet, um Kompensationsaufgaben für bestimmte Workflow-Instanzen aufzurufen. Insbesondere kann sie aus dem Überwachungszustand alle Vorgängeraufgaben im Workflow, die bereits ausgeführt wurden, ermitteln und basierend darauf die Kompensationssignale K(E1), K(E2) erzeugen und diese an die betroffenen Komponenten senden.
- Kompensationssignal K(E1), K(E2): Eine spezielle Nachricht, die von der Prozesskompensationseinheit PKE an eine Reihe von Komponenten A bis D gesendet wird, um die jeweiligen Aufgabenausführungen im Kontext einer bestimmten Workflow-Instanz zu kompensieren.

Die oben genannten Ereignisse können als Tripel aus <Ereignistyp, Ereignis-ID, Ursachen-ID> bezeichnet werden. Der Ereignistyp $\alpha$, $\beta$, $\gamma$, $\delta$ ist ein Identifikator für die Art/Typ der Nachricht, die Ereignis-ID 1 bis 5 ist eine systemweit eindeutige ID für das Ereignis und die Ursachen-ID 1, 2 ist die ID des Ereignisses, das die Komponente A bis D dazu veranlasst hat, das entsprechende Ereignis zu veröffentlichen.

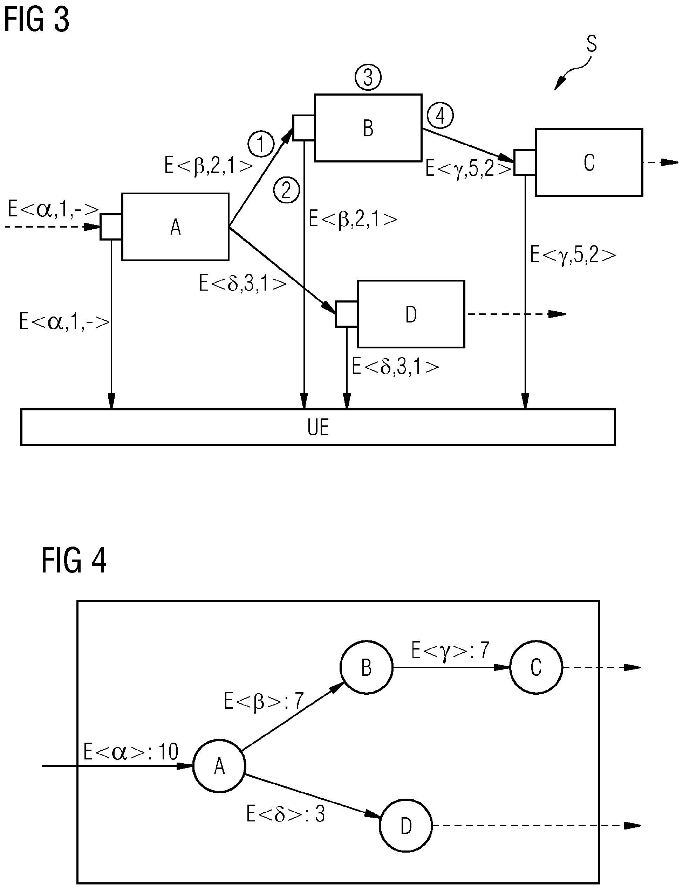

Im Folgenden wird ein Beispiel eines Prozesses beschrieben, wie er insbesondere in den Figuren 3 bis 5 gezeigt ist.

- Die Komponente A beendet ihre Verarbeitung und sendet das Ereignis mit ID=2 vom Typ=$\beta$. Da A zuvor durch das Ereignis mit der ID=1 ausgelöst wurde, wird dem Ereignis mit ID=2 die cID=1 zugewiesen.
- Wenn das Ereignis mit ID=2 von der Komponente B empfangen wird, wird dies an die Überwachungseinheit UE gemeldet, die die Zeit, die meldende Komponente und das Ereignis selbst aufzeichnet.
- Die Komponente B verarbeitet dann das Ereignis, indem sie die entsprechende Aufgabe ausführt.
- Als Ergebnis ihrer Aufgabenausführung sendet B ein neues Ereignis mit Typ=y, ID=5 und cID=2.

Dieser Prozess wiederholt sich für jedes Ereignis, das von einer der Komponenten A bis D innerhalb des Systems S verarbeitet wird. Anhand der einzelnen Ereignisse können die Abläufe in der Kommunikation der Komponenten A bis D beschrieben werden. Der Beginn eines Workflows oder Prozesses (d. h. einer Abfolge von Ereignissen) wird meist durch etwas außerhalb des Systems S ausgelöst. Diese Auslöser haben keine ID, die als Ursachen-ID verwendet werden kann und daher bleibt dieses Feld leer.

In der Überwachungseinheit UE können die Ereignisse bzw. Nachrichten in einer Tabelle gespeichert werden (siehe Tabelle 1). Jede Zeile in dieser Tabelle repräsentiert ein Ereignis, dass aus dem Ereignis E<cp,id,cid> zusammen mit seinem Empfänger und dem Zeitstempel, wann es von der empfangenden Komponente empfangen wurde, besteht. Diese Tabelle selbst stellt die Daten der Überwachungseinheit UE dar, die in einer Aufwärmphase des Systems S gelernt und der Kompensationseinheit KE über eine Schnittstelle zur Verfügung gestellt werden. Darüber hinaus stellt die Überwachungseinheit UE auch eine Schnittstelle zur Verfügung, um die Ereignisse in Echtzeit zu beobachten.

Tabelle 1

| Zeitstempel | Empfangende Komponente | Ereignistyp | Ereignis-ID | Ursachen-ID |
|---|---|---|---|---|
| 12:00:01 | A | $\alpha$ | 1 | - |
| 12:00:02 | B | $\beta$ | 2 | 1 |
| 12:00:02 | C | $\gamma$ | 5 | 2 |
| 12:00:03 | D | $\delta$ | 3 | 1 |

Um ein explizites Prozessmodell aus diesen Daten abzuleiten, kann die Kompensationseinheit KE den folgenden Algorithmus ausführen:
- Abbilden der obigen Tabelle 1, TD, mit dem Schema (Zeitstempel, Empfänger/empfangende Komponente, Ereignistyp, Ereignis-ID, Ursachen-ID) in eine Tabelle 2, SR, (siehe unten), die den Sender-Empfänger abbildet, mit dem Schema (Sender, Ereignistyp, Empfänger)
- Für jede Ereignis-ID = i in TD:

   ○

$$\text{Empfänger}_{SR} = TD[\text{Ereignis-ID} = i].\text{Empfänger}$$

   ○

$$\text{Ereignistyp}_{SR} = TD[\text{Ereignis-ID} = i].\text{Ereignistyp}$$

   ○ $\text{Sender}_{SR} = TD[\text{Ereignis-ID} = TD[\text{Ereignis-ID}=i].\text{Ursachen-ID}]$
   ○ füge neue Zeile ($\text{Sender}_{SR}$, $\text{Ereignistyp}_{SR}$, $\text{Empfänger}_{SR}$) zu SR hinzu

- Konstruieren des expliziten Prozessmodells aus der Sender-Empfänger-Tabelle 2, siehe Fig. 4:

   ○ Sei *S* die Menge an distinkten Sendekomponenten in SR
   ○ Sei *R* die Menge an distinkten Empfängerkomponenten in SR
   ○

$$V = S \cup R$$

   ○ $e \in E = \{s,r,f\}$, für

      ▪ (*s, Ereignistyp,r*) $\in$ SR, eine Reihe in SR
      ▪ $f = |(s,\ Ereignistyp,\ r)| \in SR$, die Frequenz/Häufigkeit einer Reihe in SR

| Sender | Ereignistyp | Empfänger |
|---|---|---|
| ... | ... | ... |
| - | $\alpha$ | A |
| A | $\beta$ | B |
| B | $\gamma$ | C |
| A | $\delta$ | D |
| ... | ... | ... |

Wie oben bereits erläutert, zeigt Fig. 3 die Komponenten A bis D der Fig. 1 mit der zwischen ihnen stattfindenden logischen Kommunikation. Durch Verwendung der Ereignistripel und der Tabelle 1 kann die Abfolge im Kommunikationsprozess zusammen mit der Rückverfolgung beschrieben werden. Die Abfolge sieht in dem in Fig. 3 dargestellten Beispiel wie folgt aus:

(1). Komponente A beendet ihre Verarbeitung und veröffentlicht ein Ereignis vom Typ β. Dieses Ereignis erhält die systemweit eindeutige ID 2. Da die Komponente A zuvor durch das Ereignis E(α,1,-) mit der ID 1 ausgelöst wurde, wird dem Ereignis die Ursachen-ID 1 zugewiesen, wodurch E(β, 2,1) generiert wird.

(2). Wenn das Ereignis E(β, 2,1) von der Komponente B empfangen wird, wird dies der Überwachungseinheit UE gemeldet. Die Überwachungseinheit UE zeichnet die Zeit, die meldende Komponente und natürlich das Ereignis E(β, 2, 1) selbst auf.

(3). Die Komponente B verarbeitet das Ereignis in einer Aufgabe (nicht weiter dargestellt).

(4). Als Ergebnis der Verarbeitung der Komponente B wird ein neues Ereignis veröffentlicht. Dieses hat nun den Typ γ, die ID 5 und die Ursachen-ID 2 (da dies das Ereignis war, das die Komponente B ausgelöst hat), daher wird E(γ, 5, 2) generiert.

In einer anderen Variante kann die Komponente A das Ereignis vom Typ δ veröffentlichen, das die ID 3 und die Ursachen-ID 1 hat, somit wird E(δ, 3, 1) generiert, das wiederum an die Komponente D berichtet wird.

Dieser Prozess wird für jedes Ereignis wiederholt, das von einer der Komponenten A bis D innerhalb des Systems S verarbeitet wird.

Der Beginn eines Workflows (d. h. einer Folge von Ereignissen bzw. Nachrichten) wird meistens durch etwas außerhalb des Systems S ausgelöst. Diese Auslöser haben keine ID, die als Ursachen-ID verwendet werden kann, und daher bleibt dieses Feld leer (siehe Anfangsereignis in Fig. 3).

Wie oben in Bezug auf Fig. 1 beschrieben, kann die Kompensationseinheit KE die von der Überwachungseinheit UE gesammelten Kommunikationsdaten verarbeiten und ein Prozessmodell erstellen, wie es beispielsweise in Fig. 4 gezeigt ist. Für jeden Ereignistyp α, β, γ, δ aggregiert die Kompensationseinheit KE die Häufigkeit des Auftretens nachfolgender Ereignisse zusammen mit den Komponenten A bis D, die diese empfangen.

In dem in Fig. 4 gezeigten Beispiel wird das Ereignis E<α> zehnmal veröffentlicht. In sieben Fällen wurde das Ereignis E<β> veröffentlicht und von Komponente B verarbeitet. In drei Fällen wurde das Ereignis E< δ > veröffentlicht und von Komponente D verarbeitet. In den sieben Fällen, in denen B das Ereignis E<β> verarbeitet, wird das Ereignis E<γ> sieben Mal erzeugt und von der Komponente C verarbeitet. Die gestrichelten Linien nach den Komponenten C und D stellen dar, dass der Verlauf danach in diesem Fall nicht mehr berücksichtigt wird.

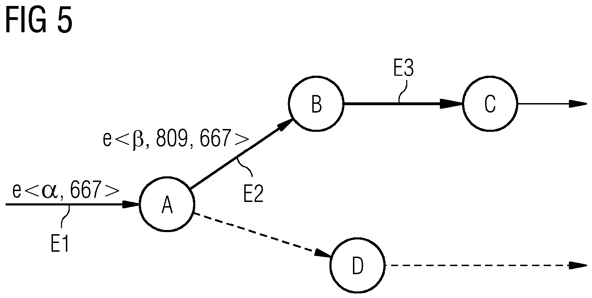

Neue Instanzen des Prozesses können detektiert werden, wenn ein Ereignis von der Überwachungseinheit UE empfangen und an die Prozessüberwachungseinheit PUE weitergeleitet wird, das keinen expliziten Absender hat (vgl. Ereignis E1 e<α,667, -> in Fig. 5). Für jede neue Prozess-Instanz erstellt die Prozessüberwachungseinheit PUE eine Prozess-Instanzrepräsentation, um den aktuellen Zustand dieses Prozesses zu verfolgen. Der Zustand umfasst eine geordnete Liste aller ausgelösten Komponenten zusammen mit dem entsprechenden auslösenden Ereignis. Nach dem Empfang des Ereignisses E2 mit ID=667 würde der aktuelle Zustand einer Liste entsprechen, die im Beispiel das Element (A, 667) enthält. In ähnlicher Weise wird beim Empfang des Ereignisses E2 e<β,809,667> die Ursachen-ID = 667 verwendet, um mit der richtigen Prozess-Instanz zu korrelieren, und der interne Zustand der Prozess-Instanz wird um (B, 809) erweitert (vgl. Fig. 5).

Das Detektieren von Fehlern bzw. Ausfällen einer Komponente (im Beispiel Komponente B) wird im Folgenden erläutert. In dem in Fig. 5 dargestellten Beispiel ist der aktuelle Zustand der Prozess-Instanz nach Erhalt des Ereignisses E2 e<β,809,667> {(A, 667), (B, 809)}. Wann immer der Zustand fortschreitet, startet die Prozessüberwachungseinheit PUE einen Timer, der auf einen anpassbaren Parameter (z.B. 1 Minute) gesetzt wird. Wenn der Timer abgelaufen ist und keines der gemäß dem Prozessmodell vorhergesagten Ereignisse beobachtet wurde (im Beispiel wäre dies ein Ereignis des Typs γ gemäß dem Prozessmodell in Fig. 4, das dem Übergang von B nach C in Fig. 4 entspricht), wurde ein Fehler in der Prozessausführung für diese bestimmte Instanz in der Komponente B detektiert. Die Information über den Komponentenfehler wird dann zusammen mit dem akkumulierten Zustand der Prozessinstanz an die Prozesskompensationseinheit PKSE übergeben.

Die Prozesskompensationseinheit PKSE empfängt den Zustand der Prozessinstanz und sendet anschließend Kompensationssignale K(E1), K(E2) für jeden Eintrag in der entsprechenden Zustandsliste aus. In dem in Fig. 5 beschriebenen Beispiel würde die Liste die Einträge (A, 667) und (B, 809) umfassen. Folglich werden die Kompensationssignale K(E1), K(E2) erzeugt und an die Komponenten B bzw. A gesendet. Die Komponenten B und A nehmen die entsprechenden Änderungen in ihrem lokalen Systemzustand zurück, wodurch wiederum der gesamte Workflow bzw. Prozess für die fehlgeschlagene Instanz zurückgenommen und kompensiert wird. Um schließlich den Benutzer, der den Workflow ursprünglich ausgelöst hat, über den Abbruch und die Rückabwicklung zu benachrichtigen, kann die Komponente A eine geeignete Benachrichtigung über einen selbst definierten Kanal senden.

Im Gegensatz zu bisherigen Systemen funktioniert dieses Vorgehen auch in Szenarien, in denen die ausgefallene Komponente nicht mehr in der Lage ist, die Kompensationsmaßnahmen selbst auszulösen, weil sie bereits vollständig offline ist. Gleichzeitig unterstützt der Ansatz auch implizite Workflow-Ausführungen ohne zentrale Orchestrierung, da die expliziten Workflow-Modelle während der Laufzeit abgeleitet werden.

Obwohl die vorliegende Erfindung anhand von Ausführungsbeispielen beschrieben wurde, ist sie vielfältig modifizierbar.

**Patentansprüche**

1. System (S) zum Kompensieren von Ausfällen von Komponenten (A, B, C, D), wobei das System (S) mehrere Komponenten (A, B, C, D) aufweist, wobei jede der mehreren Komponenten (A, B, C, D) dazu ausgebildet ist, zumindest eine Aufgabe auszuführen, wobei die Komponenten (A, B, C, D) des Weiteren dazu ausgebildet sind, mit anderen Komponenten (A, B, C, D) Nachrichten (E, E1, E2, E3) auszutauschen, um die jeweiligen Aufgaben, die Teil eines Prozesses sind, auszuführen, wobei das System (S) des Weiteren aufweist:

   - eine Überwachungseinheit (UE), die dazu ausgebildet ist, den Austausch von Nachrichten (E, E1, E2, E3) zwischen den mehreren Komponenten (A, B, C, D) zur Durchführung von Prozessen zu überwachen, und
   - eine Kompensationseinheit (KE), die dazu ausgebildet ist, basierend auf dem Austausch von Nachrichten (E, E1, E2, E3) ein Prozessmodell des Systems (S) zu erstellen, einen Ausfall einer Komponente (A, B, C, D) während der Durchführung eines Prozesses zu detektieren und basierend auf dem Ausfall der Komponente (A, B, C, D) eine oder mehrere andere Komponenten (A, B, C, D) des Systems (S), die an demselben Prozess beteiligt sind, über die ausgefallene Komponente (A, B, C, D) zu informieren, um den Ausfall der Komponente (A, B, C, D) zu kompensieren.

2. System nach Anspruch 1, **dadurch gekennzeichnet, dass** die Kompensationseinheit (KE) dazu ausgebildet ist, zu detektieren, wenn eine Nachricht (E, E1, E2, E3) nicht in einem vordefinierten Zeitraum von einer sendenden Komponente (A, B, C, D) an eine empfangende Komponente (A, B, C, D) übertragen wird, und dies als Ausfall der sendenden Komponente (A, B, C, D) zu detektieren.

3. System nach Anspruch 1 oder 2, **dadurch gekennzeichnet, dass** die Kompensationseinheit (KE) dazu ausgebildet ist, bei einem detektierten Ausfall einer Komponente (A, B, C, D) die Komponenten (A, B, C, D), die im Prozessmodell der ausgefallenen Komponente (A, B, C, D) vorgeschaltet sind, über den Ausfall der Komponente (A, B, C, D) zu informieren.

4. System nach Anspruch 3, **dadurch gekennzeichnet, dass** die Kompensationseinheit (KE) dazu ausgebildet ist, die Komponenten (A, B, C, D), die im Prozessmodell der ausgefallenen Komponente (A, B, C, D) vorgeschaltet sind, zu veranlassen, den entsprechenden Prozess, der die ausgefallene Komponente (A, B, C, D) beinhaltet, rückabzuwickeln.

5. System nach einem der vorhergehenden Ansprüche, **dadurch gekennzeichnet, dass** die Überwachungseinheit (UE) dazu ausgebildet ist, für eine Nachricht (E, E1, E2, E3) einen Zeitpunkt einer Nachricht (E, E1, E2, E3) und die aussendende Komponente (A, B, C, D) zu bestimmen und zu speichern.

6. System nach Anspruch 5, **dadurch gekennzeichnet, dass** die Überwachungseinheit (UE) dazu ausgebildet ist, für die Nachricht (E, E1, E2, E3) die empfangende Komponente (A, B, C, D) zu bestimmen und zu speichern.

7. System nach Anspruch 5 oder 6, **dadurch gekennzeichnet, dass** die Überwachungseinheit (UE) dazu ausgebildet ist, einen Nachrichtentyp der Nachricht (E, E1, E2, E3) zu bestimmen und zu speichern.

8. System nach einem der vorhergehenden Ansprüche, **dadurch gekennzeichnet, dass** die Überwachungseinheit (UE) dazu ausgebildet ist, Nachrichten (E, E1, E2, E3) von mehreren Komponenten (A, B, C, D) basierend auf Kausalitäten zu korrelieren und für eine Nachricht (E, E1, E2, E3) eine eindeutige Identifikationsnummer der Nachricht (E, E1, E2, E3) und eine Kausalitätsidentifikationsnummer zu speichern, wobei die Kausalitätsidentifikationsnummer angibt, mit welcher Nachricht (E, E1, E2, E3) die Nachricht (E, E1, E2, E3) aufgrund einer Kausalität korreliert ist.

9. System nach einem der vorhergehenden Ansprüche, **dadurch gekennzeichnet, dass** die Überwachungseinheit (UE) dazu ausgebildet ist, innerhalb der ausgetauschten Nachrichten (E, E1, E2, E3) eine Häufigkeit des Auftretens von Nachrichten (E, E1, E2, E3) zu detektieren und diese an die Kompensationseinheit (KE) zur Erstellung des Prozessmodells zu übertragen.

10. System nach einem der vorhergehenden Ansprüche, **dadurch gekennzeichnet, dass** die Kompensationseinheit (KE) dazu ausgebildet ist, die Nachrichten (E, E1, E2, E3) über einen vordefinierten Zeitraum zu berücksichtigen, um das Prozessmodell zu erstellen.

11. System nach Anspruch 10, **dadurch gekennzeichnet, dass** die Kompensationseinheit (KE) dazu ausgebildet ist, den Zeitraum basierend auf einer ausgewählten Genauigkeit des Prozessmodells zu bestimmen.

12. Verfahren zum Kompensieren von Ausfällen von Komponenten (A, B, C, D) in einem System (S), wobei das System (S) mehrere Komponenten (A, B, C, D) aufweist, wobei jede der mehreren Komponenten (A, B, C, D) zumindest eine Aufgabe ausführt, wobei die Komponenten (A, B, C, D) mit anderen Komponenten (A, B, C, D) Nachrichten (E, E1, E2, E3) austauschen, um die jeweiligen Aufgaben, die Teil eines Prozesses sind, auszuführen, wobei das Verfahren die Schritte aufweist:

    - Überwachen (S1) des Austauschs von Nachrichten (E, E1, E2, E3) zwischen den mehreren Komponenten (A, B, C, D) zur Durchführung von Prozessen,
    - Erstellen (S2) eines Prozessmodells basierend auf dem Austausch von Nachrichten (E, E1, E2, E3),
    - Detektieren (S3) eines Ausfalls einer Komponente (A, B, C, D) während der Durchführung eines Prozesses,
    - Informieren (S4) von einer oder mehrerer anderer Komponenten (A, B, C, D) des Systems (S), die an demselben Prozess beteiligt sind, über die ausgefallene Komponente (A, B, C, D) basierend auf dem Ausfall der Komponente (A, B, C, D), und
    - Kompensieren (S5) des Ausfalls der Komponente (A, B, C, D).

13. Computerprogrammprodukt, welches auf einer programmgesteuerten Einrichtung die Durchführung des Verfahrens gemäß Anspruch 12 veranlasst.

## FIG 1

## FIG 2

FIG 3

FIG 4

FIG 5

$e<\alpha, 667>$
E1

$e<\beta, 809, 667>$
E2

E3

A

B

C

D

Europäisches
Patentamt

European
Patent Office

Office européen
des brevets

**EUROPÄISCHER RECHERCHENBERICHT**

Nummer der Anmeldung

EP 24 20 2143

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | LIMA STANLEY ET AL: "Improving observability in Event Sourcing systems", JOURNAL OF SYSTEMS & SOFTWARE, ELSEVIER NORTH HOLLAND, NEW YORK, NY, US, Bd. 181, 9. Juni 2021 (2021-06-09), XP086762654, ISSN: 0164-1212, DOI: 10.1016/J.JSS.2021.111015 [gefunden am 2021-06-09] * Zusammenfassung * * 2. Background * * 2.1 Event Sourcing * * 3.1 Process Mining * * 4. Problem Statement * * 6.2 Comparison * ----- | 1-13 | INV. G06F11/14 |
| A | WALID GAALOUL ET AL: "Log-based transactional workflow mining", DISTRIBUTED AND PARALLEL DATABASES, KLUWER ACADEMIC PUBLISHERS, BO, Bd. 25, Nr. 3, 14. März 2009 (2009-03-14), Seiten 193-240, XP019673386, ISSN: 1573-7578 * das ganze Dokument * ----- | 1-13 | |

| | | | RECHERCHIERTE SACHGEBIETE (IPC) |
|---|---|---|---|
| | | | G06F |

Der vorliegende Recherchenbericht wurde für alle Patentansprüche erstellt

| Recherchenort | Abschlußdatum der Recherche | Prüfer |
|---|---|---|
| München | 25. Februar 2025 | Leuridan, Koen |

EPO FORM 1503 03.82 (P04C03)